# EUROPÄISCHE PATENTSCHRIFT

(11) **EP 0 680 805 B1**
(45) Veröffentlichungstag und Bekanntmachung des Hinweises auf die Patenterteilung: **31.01.2001**
(21) Anmeldenummer: 95105090.5
(22) Anmeldetag: 05.04.1995
(51) Int. Cl.: B23K 26/04

(54) **Laserschneidmaschine mit Fokuslageneinstellung**
Laser cutting machine with focus position adjustment
Machine de coupage au laser avec réglage de la position focale

(30) Priorität: 02.05.1994 DE 9407288 U
(43) Veröffentlichungstag der Anmeldung: 08.11.1995
(73) Patentinhaber: Trumpf GmbH & Co, D-71254 Ditzingen (DE)
(72) Erfinder: Klingel, Hans, D-71696 Möglingen (DE); Weick, Jürgen-Michael, D-71679 Asperg (DE)
(74) Vertreter: KOHLER SCHMID + PARTNER

(56) Entgegenhaltungen:
- EP-A- 0 559 912
- DE-A- 3 930 495
- DE-A- 4 104 344
- DE-A- 4 129 278
- DE-A- 4 137 832

## Beschreibung

Die Erfindung betrifft eine Laserschneidmaschinenanordnung umfassend
- eine Laserschneidmaschine mit
   -- einem Lasergenerator,
   -- einem Laserschneidkopf mit einer Fokussieroptik für den Laserstrahl und einer Stelleinrichtung zur Einstellung der Fokuslage des Laserstrahls durch Verlagerung des Fokus' gegenüber dem Laserschneidkopf im wesentlichen senkrecht zu einem zu bearbeitenden Werkstück und
   -- einem Antrieb für den Laserschneidkopf
sowie
- eine numerische Steuerung,
wobei
- der Antrieb für den Laserschneidkopf durch die numerische Steuerung gesteuert ist,
- der Laserschneidkopf mittels des Antriebs relativ zu dem Lasergenerator und/oder relativ zu dem zu bearbeitenden Werkstück in einer Ebene im wesentlichen parallel zu dem Werkstück verschiebbar ist und während des Bearbeitungsvorgangs eine Fläche bestreicht, die in wenigstens zwei Teilbereiche unterteilt ist und
- zur Einhaltung einer senkrecht zu dem Werkstück gleichbleibenden Fokuslage in Abhängigkeit von der Position des Laserschneidkopfs in dessen Bewegungsebene parallel zu dem Werkstück mittels der numerischen Steuerung die momentane Position des Laserschneidkopfs erfaßbar, der erfaßten Position des Laserschneidkopfs ein Verstellwert zuordenbar und die Stelleinrichtung zur Einstellung der Fokuslage des Laserstrahls anhand des Verstellwertes steuerbar ist.

An Laserschneidmaschinen mit einer sogenannten "fliegenden Optik", bei denen der Laserschneidkopf mit der Fokussieroptik für den Laserstrahl relativ zu dem während der Bearbeitung ortsfesten Werkstück bewegt wird, hat der Laserstrahl aufgrund des ständigen Positionswechsels des Laserschneidkopfs sich ständig ändernde Weglängen von dem Lasergenerator bis zu der Fokussieroptik am Laserschneidkopf zurückzulegen. Die Laserstrahllänge ist u.a. bestimmend für die Lage des mittels der Fokussieroptik erzeugten Laserstrahl-Fokus' senkrecht zu dem zu bearbeitenden Werkstück. Um aber eine einheitliche Schneidqualität bzw. einheitliche Schneiddaten während des gesamten Bearbeitungsvorgangs gewährleisten zu können, muß sichergestellt sein, daß sich die Fokuslage auch bei Positionswechseln des Laserschneidkopfs und der damit verbundenen Änderung der Laserstrahllänge senkrecht zu dem Werkstück nicht, allenfalls geringfügig, ändert.

Um über den gesamten Bewegungsbereich des Laserschneidkopfs parallel zu dem zu bearbeitenden Werkstück eine senkrecht zu dem Werkstück gleichbleibende Fokuslage zu erhalten, wird bei Laserschneidmaschinen bekanntermaßen der gesamte Laserschneidkopf in Abhängigkeit von der Laserstrahllänge angehoben oder abgesenkt. Die Lage des Fokus' bleibt dabei relativ zu dem Laserschneidkopf unverändert.

Zur Einstellung der Fokuslage durch Verlagerung des Fokus' gegenüber dem Laserschneidkopf bedient sich ein bekannter, zu einer gattungsgemäßen Laserschneidmaschine entwickelter Versuchsaufbau einer Stelleinrichtung zur optischen Einstellung der Fokuslage in Form adaptiver sphärischer Umlenkspiegel für den Laserstrahl, die der Fokussieroptik des Laserschneidkopfs in Richtung des Laserstrahls vorgeschaltet sind. Durch Beaufschlagung der den Spiegelflächen abgewandten Flächen der Umlenkspiegel mit wechselnden Drücken, kann die Krümmung der Spiegelflächen und somit deren Brennweite variiert werden. Mit einer Veränderung der Spiegelkrümmung einher geht eine Veränderung der Divergenz bzw. Konvergenz des Laserstrahls, der von dem der Fokussieroptik unmittelbar vorgeschalteten Umlenkspiegel auf diese reflektiert wird. Ändert sich nun die Laserstrahlgeometrie infolge einer Positionsänderung des Laserschneidkopfs und einer damit verbundenen Änderung der Strahllänge, so kann diese Geometrieänderung durch Variierung der Spiegelkrümmung ausgeglichen werden. Die Lage des von der Fokussieroptik erzeugten Fokus' senkrecht zu dem Werkstück bleibt infolgedessen unabhängig von der Länge des Laserstrahls unverändert. In der bekannten Versuchsanordnung ist lediglich das geschilderte allgemeine Funktionsprinzip zur optischen Einstellung der Fokuslage des Laserstrahls mittels adaptiver Spiegel realisiert.

Eine gattungsgemäße Laserschneidmaschinenanordnung wird beschrieben in EP-A-0 559 912. An dieser vorbekannten Anordnung werden ausgehend von den Koordinaten der Bearbeitungs-Ausgangsposition eines Laserschneidkopfs in der Bearbeitungsebene (x-y-Ebene) die Koordinaten der momentanen Bearbeitungspunkte des im Schneidbetrieb befindlichen Laserschneidkopfs ermittelt. Anhand der ermittelten Koordinatenwerte wird dann die jeweilige Länge des Laserstrahls errechnet. Der errechneten Laserstrahllänge wird anschließend ein Verstellwert zugeordnet, anhand dessen die im Falle der vorbekannten Anordnung vorgesehene Stelleinrichtung zur Einstellung einer gleichbleibenden Fokuslage des Laserstrahls gesteuert wird.

Ausgehend von dem zuletzt beschriebenen Stand der Technik liegt der Erfindung die Aufgabe zugrunde, die Einstellung der Fokuslage des Bearbeitungsstrahls einer Laserschneidmaschine gegenüber dem zu bearbeitenden Werkstück zu vereinfachen.

Erfindungsgemäß gelöst wird diese Aufgabe dadurch, daß mittels der numerischen Steuerung einer Laserschneidmaschinenanordnung der eingangs genannten Art jedem der Teilbereiche der von dem Laserschneidkopf bestrichenen Fläche ein Verstellwert zur Einstellung einer gleichbleibenden Fokuslage unmittelbar zuordenbar ist. Mittels der numerischen Steuerung wird zunächst die Position des Laserschneidkopfs stellvertretend für die Länge des Laserstrahls erfaßt. Jedem Teilbereich der von dem Laserschneidkopf bestrichenen Fläche ist ein Verstellwert zur Einstellung einer gleichbleibenden Fokuslage unmittelbar zugeordnet. Die Anzahl der Teilbereiche wird zweckmäßigerweise in Abhängigkeit von der Größe der Fläche gewählt, die mit dem Laserschneidkopf während des Bearbeitungsvorgangs bestrichen wird. Auf der Grundlage des für jeden Teilbereich vorgegebenen Verstellwerts steuert die numerische Steuerung die Verstellung der Stelleinrichtung für die Fokuslage. Eine Verstellung der Stelleinrichtung wird stets dann veranlaßt, wenn der Laserschneidkopf von einem Teilbereich seines Bewegungsbereichs in einen diesem benachbarten Teilbereich wechselt.

In Weiterbildung der Erfindung weist die Stelleinrichtung zur Einstellung der Fokuslage wenigstens einen der Fokussieroptik in Richtung des Laserstrahls vorgeschalteten Umlenkspiegel für den Laserstrahl auf, welcher an der seiner Spiegelfläche abgewandten Fläche von einem unter veränderbarem Druck stehenden Fluid beaufschlagt und dadurch adaptiv gekrümmt wird und welcher über eine stellbare Drosselanordnung mit Fluid beaufschlagt wird, mittels derer der Druck des Fluids veränderbar ist, wobei die numerische Steuerung der erfaßten Position des Laserschneidkopfs als Verstellwert zur Einstellung der Fokuslage einen Sollwert für den Druck des Fluids zuordnet und zur Einstellung dieses Sollwertes die stellbare Drosselanordnung steuert. Durch Regulierung des Durchflußquerschnitts der stellbaren Drosselanordnung wird der an deren Ausgangsseite anstehende Druck des Fluids reguliert. Dementsprechend kann die Spiegelfläche des stromabwärts der Drosselanordnung gelegenen Umlenkspiegels mit variablen Drücken beaufschlagt und in seiner Krümmung verändert werden. Von der Krümmung der Spiegelfläche abhängig ist die Konvergenz bzw. die Divergenz des durch den Umlenkspiegel auf die Fokussieroptik reflektierten und von dieser auf das Werkstück gebündelten Laserstrahls. Infolgedessen führt eine Veränderung des an der Ausgangsseite der stellbaren Drosselanordnung anstehenden und auf die Rückseite der Spiegelfläche des Umlenkspiegels wirkenden Fluiddrucks zu einer Änderung der Fokussierungsverhältnisse an der Fokussieroptik und somit zu einer Einstellung der Fokuslage des Laserstrahls senkrecht zu dem Werkstück. Mittels der numerischen Steuerung wird über den Verstellwert die Stelleinrichtung zur optischen Einstellung der Fokuslage derart gesteuert, daß sich über den gesamten Bewegungsbereich des Laserschneidkopfs in dessen Bewegungsebene parallel zu dem zu bearbeitenden Werkstück bezogen auf letzteres eine einheitliche Fokuslage einstellt.

Im Falle einer weiteren Ausführungsform der erfindungsgemäßen Laserschneidmaschinenanordnung ist den Teilbereichen mit in etwa übereinstimmender Länge des Laserstrahls von dem Lasergenerator bis zum Laserschneidkopf ein übereinstimmender Sollwert für den Druck des Fluids zugeordnet und als Drosselanordnung eine Parallelschaltung von Drosselventilen vorgesehen, deren Anzahl der Anzahl unterschiedlicher Sollwerte für den Druck des Fluids entspricht. In Abhängigkeit von der Lage des Teilbereichs, innerhalb dessen sich der Laserschneidkopf momentan bewegt, steuert die numerische Steuerung auf der Grundlage des dem betreffenden Teilbereich zugeordneten Verstellwerts die einzelnen Drosselventile der Drosselanordnung an. Wechselt der Laserschneidkopf von einem Teilbereich seines Bewegungsbereichs in einen anderen, so wird über die numerische Steuerung die Anzahl der in Öffnungsstellung geschalteten Drosselventile verändert. Durch Zuschalten bzw. durch Schließen eines oder mehrerer der parallel geschalteten Drosselventile wird der Durchflußquerschnitt der Drosselanordnung und dadurch der an deren Ausgangsseite anstehende und die Krümmung der Spiegelfläche des Umlenkspiegels bestimmende Druck des Fluids auf den gewünschten Wert eingestellt.

Wird eines der parallel geschalteten Drosselventile permanent von Fluid durchströmt, so ist bei Verwendung eines als Kühlmittel geeigneten Fluids stets eine hinreichende Kühlung der Spiegelfläche des Umlenkspiegels gewährleistet. Zweckmäßigerweise entspricht der Druck des Fluids, der sich an der Ausgangsseite der Drosselanordnung einstellt, wenn die übrigen Drosselventile der Drosselanordnung in Schließstellung geschaltet sind und lediglich das permanent geöffnete Drosselventil von Fluid durchströmt wird, einem einem Teilbereich der Laserschneidkopfbewegung zugeordneten Druck-Sollwert.

In weiterer vorteilhafter Ausgestaltung der Erfindung ist vorgesehen, daß die Fokussieroptik an dem Laserschneidkopf mittels eines Zustellmotors im wesentlichen senkrecht zu dem Werkstück verschiebbar geführt ist. Eine derartige Laserschneidmaschinenanordnung zeichnet sich durch eine funktionssichere optische Einstellung der Fokuslage aus. Eine Veränderung der Fokus lage infolge eines Positionswechsels des Laserschneidkopfs und einer damit verbundenen Anderung der Laserstrahl länge kann durch eine Verschiebung der Fokussieroptik vermieden werden. Das Gehäuse des Laserschneidkopfs mit den daran vorgesehenen Bauteilen, wie etwa der Düse zum Aufgeben von Schneidgas in die Schneidspur des Laserstrahls kann seinen einmal eingestellten Abstand von dem Werkstück während des gesamten Bearbeitungsvorgangs beibehalten. Die bei der Fokuslageneinstellung zu bewegende Masse ist dementsprechend minimal; der gleichbleibende Abstand der Düse von dem Werkstück gewährleistet gemeinsam mit der über den gesamten Bewegungsbereich des Laserschneidkopfs gleichbleibenden Fokus lage eine einheitliche Schneidqualität.

Ein Automatisierter Betrieb der Anordnung mit einer Optimierung der Bearbeitungszeit wird dadurch ermöglicht, daß die Fokussieroptik mittels eines durch die numerische Steuerung gesteuerten Zustellmotors verschiebbar ist. Bei Wahl entsprechend feinfühlig stellbarer Zustellmotoren ist eine feinfühlige Justierung der Fokussieroptik gewährleistet.

Bei einer bevorzugten Ausführungsform der erfindungsgemäßen Laserschneidmaschinenanordnung ist als Zustellmotor ein elektrischer Schrittmotor vorgesehen. Alternativ empfiehlt sich als Zustellmotor eine Kolben-Zylinder-Anordnung.

Als weitere Maßnahme zur funktionssicheren optischen Einstellung der Fokuslage ist erfindungsgemäß vorgesehen, daß die Stelleinrichtung zur Einstellung der Fokuslage wenigstens ein der Fokussieroptik in Richtung des Laserstrahls vorgeschaltetes Linsensystem mit verstellbarer Brennweite aufweist. Durch die Verstellung der Brennweite des genannten Linsensystems wird ebenso wie durch die adaptiven Spiegel die Konvergenz bzw. Divergenz des auf die Fokussieroptik auftreffenden Laserstrahls beeinflußt. Ein Ausgleich der sich bei einer Änderung der Laserstrahllänge ansonsten ergebenden Lageänderung des von der Fokussieroptik erzeugten Laserstrahl-Fokus relativ zu dem Werkstück ist die Folge.

Vorteilhafterweise weist das Linsensystem wenigstens eine Sammellinse und wenigstens eine Zerstreuungslinse auf, welche in Richtung des Laserstrahls hintereinander angeordnet und zur Verstellung der Brennweite relativ zueinander verschiebbar sind. Durch eine einfach steuerbare Bewegung, nämlich durch eine lineare Relativverschiebung von Sammellinse und Zerstreuungslinse in Achsrichtung des Laserstrahls kann bei dieser Ausführungsform der erfindungsgemäßen Laserschneidmaschinenanordnung die Brennweite des Linsensystems und somit die Konvergenz bzw. Divergenz des auf die Fokussieroptik auftreffenden Laserstrahls variiert werden. Ein automatisierter zeitoptimierter Betrieb einer derartigen Laserschneidmaschinenanordnung ist sichergestellt, wenn die Brennweite des Linsensystems durch die numerische Steuerung gesteuert wird.

Sowohl bei Verwendung einer verschiebbaren Fokussieroptik als auch bei Verwendung eines der Fokussieroptik vorgeschalteten und in seiner Brennweite variablen Linsensystems erfolgt die Fokuslageneinstellung mittels der numerischen Steuerung der Laserschneidmaschine nach dem Prinzip, wie es vorstehend für erfindungsgemäße Laserschneidmaschinen mit adaptiven Umlenkspiegeln erläutert worden ist.

Die Erfindung wird nachfolgend anhand schematischer Darstellungen eines Ausführungsbeispieles näher erläutert. Es zeigen:
- Figur 1: eine schematische Darstellung der Führung des Laserstrahls an einer Laserschneidmaschine mit adaptivem Umlenkspiegel für den Laserstrahl,
- Figur 2: den prinzipiellen Aufbau einer Vorrichtung zur Fokuslageneinstellung mittels eines druckbeaufschlagten adaptiven Spiegels gemäß Figur 1,
- Figur 3: die Druckversorgung für den adaptiven Spiegel gemäß Figur 2,
- Figur 4: den in Teilbereiche unterteilten Bewegungsbereich eines Laserschneidkopfs,
- Figur 5a: den prinzipiellen Aufbau einer Vorrichtung zur Fokuslageneinstellung durch Verschieben der Fokussieroptik mittels einer Kolben-Zylinder-Anordnung,
- Figur 5b: den prinzipiellen Aufbau einer Vorrichtung zur Fokuslageneinstellung durch Verschieben der Fokussieroptik mittels eines elektrischen Stellmotors und
- Figur 6: den prinzipiellen Aufbau einer Vorrichtung zur Fokuslagenverstellung mittels eines Linsensystems mit verstellbarer Brennweite.

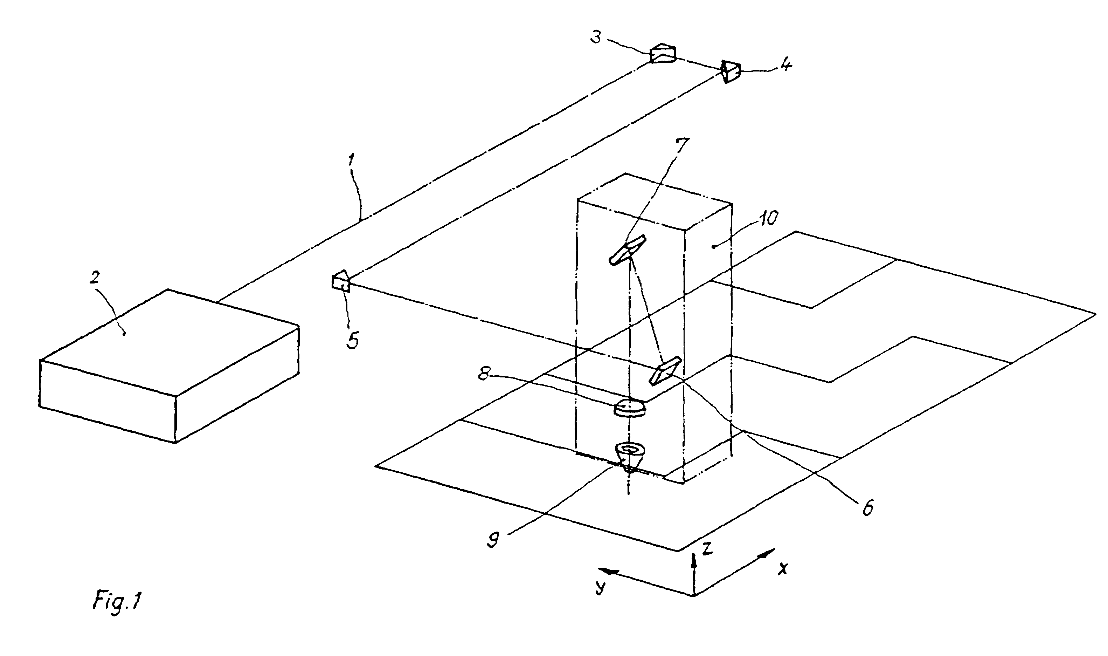

Wie Figur 1 zu entnehmen ist, wird bei Laserschneidmaschinen ein Laserstrahl 1 ausgehend von einem Lasergenerator 2 über Umlenkspiegel 3, 4, 5, 6, 7 zu einer als Sammellinse 8 ausgebildeten Fokussieroptik gelenkt. Die Sammellinse 8 bündelt den Laserstrahl 1 durch eine Düse 9 auf ein nicht dargestelltes Werkstück. Die Düse 9 dient zur Aufgabe von Schneidgas in die Schneidspur des Laserstrahls 1. Bei dem Umlenkspiegel 7 handelt es sich um einen adaptiven Spiegel mit veränderbarer Krümmung.

Der Lasergenerator 2 sowie die Umlenkspiegel 3 und 4 sind ortsfest an dem Maschinengestell der Laserschneidmaschine installiert. An dem Maschinengestell verschiebbar geführt ist ein Laserschneidkopf 10, an dessen Außenseite der Umlenkspiegel 6 angebracht ist und der den Umlenkspiegel 7 sowie die Sammellinse 8 und die Düse 9 aufnimmt. Der Laserschneidkopf 10 besitzt einen dreiachsigen Bewegungsbereich. In einer horizontalen Ebene ist er in Richtung einer x-Achse sowie einer y-Achse bewegbar. Darüber hinaus ist der Laserschneidkopf 10 in Richtung einer z-Achse heb- und senkbar. Unterhalb des Laserschneidkopfs (10) ist dessen in vier Teilbereiche unterteilter Bewegungsbereich angedeutet.

Anhand von Figur 1 ist zu erkennen, daß ein Positionswechsel des Laserschneidkopfs 10 verbunden ist mit einer Änderung der Weglänge, die der Laserstrahl 1 von dem Lasergenerator 2 bis zur Sammellinse 8 zurückzulegen hat. Mit einer Änderung der Länge des Laserstrahls 1 ist eine Änderung der Lage des Fokus, zu dem die Sammellinse 8 den Laserstrahl 1 bündelt, in einer Richtung senkrecht zu dem nicht dargestellten Werkstück verbunden. Eine derartige Änderung der Fokuslage während des Schneidvorgangs aber bewirkt Änderungen der Schneidqualität bzw. der Schneiddaten.

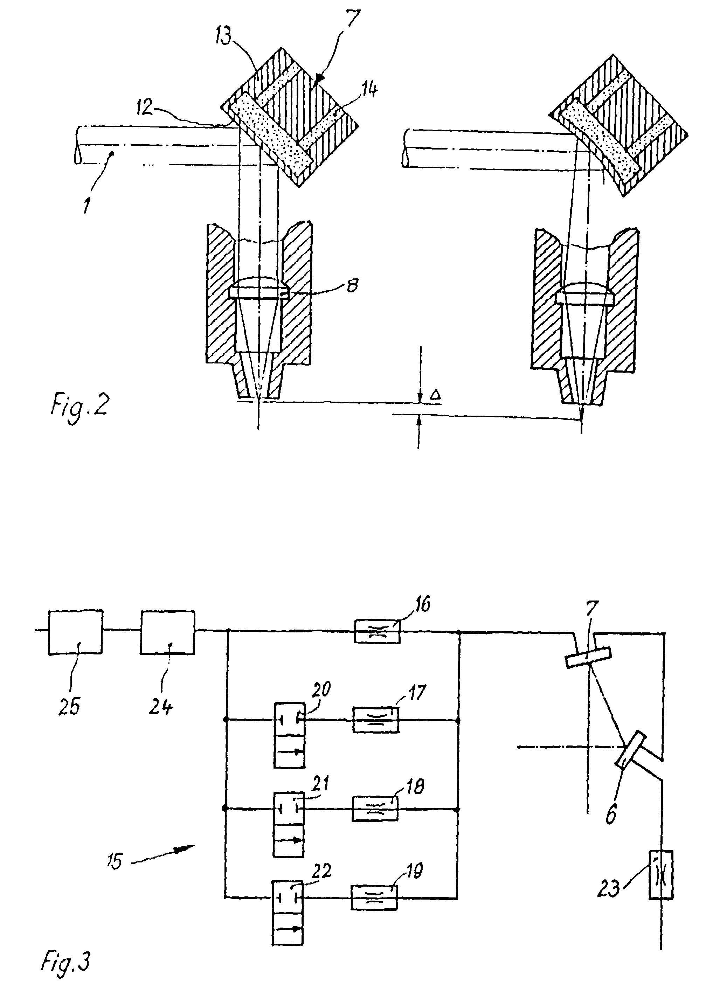

Zur Vereinheitlichung der Fokuslage ist es denkbar, den Laserschneidkopf 10 in Abhängigkeit von der Länge des Laserstrahls 1 in Richtung der z-Achse zu verschieben. Der Fokus, dessen Abstand von der Sammellinse 8 unverändert bleibt, kann durch die Bewegung des Laserschneidkopfs 10 in z-Richtung je nach Erfordernissen angehoben oder abgesenkt werden und dadurch auf einem einheitlichen Niveau bezogen auf das Werkstück gehalten werden. Wird der Laserschneidkopf 10 angehoben oder abgesenkt, so bewegt sich die Düse 9 mit, so daß sich der Abstand zwischen Düsenunterkante und Werkstückoberkante während des Bearbeitungsvorgangs häufig ändert. Dieser Abstand muß aber, um gleichartige Schneidverhältnisse über den gesamten Bearbeitungsbereich zu erhalten, genauso konstant gehalten werden wie die Fokuslage. Ein gleichbleibender Abstand zwischen Düse und Werkstück ist gewährleistet bei den in den Figuren 2, 5a, 5b und 6 dargestellten Vorrichtungen zur Fokuslageneinstellung. Diese Vorrichtungen ermöglichen es nämlich, den Laserschneidkopf 10 mit einem konstanten Abstand in Richtung der z-Achse über das zu bearbeitende Werkstück zu führen.

Die Vorrichtung nach Figur 1 bedient sich zu diesem Zweck des adaptiven Spiegels 7, Der adaptive Spiegel 7 besitzt eine polierte Spiegelfläche 12, die von der Oberfläche einer dünnen Metallscheibe gebildet wird. Diese dünne Metallscheibe ist mit ihren Rändern in den Fassungsring eines Spiegelgehäuses 13 eingespannt. Von der Spiegelfläche 12 wird der einfallende Laserstrahl 1 zu einer Sammellinse 8 reflektiert, die den Laserstrahl 1 auf die Werkstückoberfläche bündelt.

An der der Spiegelfläche 12 abgewandten Fläche wird die Metallscheibe des Spiegels über eine Fluidleitung 14 mit Druckwasser beaufschlagt. Da die Metallscheibe des dargestellten Spiegels 7 bei einem Druck von 1,25 bar plan gefertigt worden ist, ergibt sich ein planer Verlauf der Spiegelfläche 12 dann, wenn in der Fluidleitung 14 Druckwasser mit einem Druck von 1,25 bar ansteht. Sinkt der Druck in der Fluidleitung 14 unter diesen Wert ab, so nimmt die Spiegelfläche 12 ein konkave Form an, wie dies in der rechten Teildarstellung der Figur 2 gezeigt ist. Entsprechend führt eine Erhöhung des Drucks in der Fluidleitung 14 über 1,25 bar zu einer konvexen Verformung der Spiegelfläche 12. Der Grad der Konvexität bzw. Konkavität der Spiegelfläche 12 kann durch Steuerung des Drucks in der Fluidleitung 14 eingestellt werden. Wie bei Vergleich der linken und der rechten Darstellung von Figur 2 zu erkennen ist, führt eine Veränderung der Krümmung der Spiegelfläche 12 zu einer Veränderung der Konvergenz bzw. Divergenz des von der Spiegelfläche 12 reflektierten Laserstrahls 1. In Abhängigkeit von der sich einstellenden Geometrie des Laserstrahls 1. variiert die Lage des von der Sammellinse 8 erzeugten Fokus des Laserstrahls 1 senkrecht zu dem Werkstück.

Eingestellt wird der in der Fluidleitung 14 anstehende Druck mit Hilfe der numerischen Steuerung der Laserschneidmaschine. Diese steht mit einer Drosselanordnung 15 in Verbindung, wie sie in Figur 3 dargestellt ist. Die Drosselanordnung 15 ist dem adaptiven Spiegel 7 in Strömungsrichtung des Druckwassers vorgelagert und umfaßt vier parallelgeschaltete Drosselventile 16, 17, 18, 19. Das Drosselventil 16 wird permanent von Druckwasser durchströmt. Der Durchfluß von Druckwasser durch die Drosselventile 17, 18, 19 kann durch steuerbare Magnetventile 20, 21, 22 gesperrt bzw freigegeben werden. Eine feste Drossel 23 ist im Rücklauf des Druckwassers vorgesehen; ein Druckregler 24 und ein Feinstfilter 25 sind der Drosselanordnung 15 vorgeschaltet.

Das von einer Druckquelle bereitgestellte Druckwasser wird der Drosselanordnung 15 über den Feinstfilter 25 und den Druckregler 24 zugeführt. Mittels des Druckreglers 24 wird ein maximaler Systemdruck vorgegeben. Da die feste Drossel 23 einen unveränderlichen Durchflußquerschnitt besitzt und infolgedessen einen konstanten Staudruck aufbaut, kann der in der Fluidleitung 14 des adaptiven Spiegels 7 anstehende Druck durch Steuerung der Drosselanordnung 15 eingestellt werden. Da das Drosselventil 16 permanent von Druckwasser durchströmt wird, wird der adaptive Spiegel 7 sowie der diesem nachgeschaltete Umlenkspiegel 6 stets mit einer gewissen als Kühlmittel fungierenden Druckwassermenge versorgt. Bei dem dargestellten Ausführungbeispiel steht bei geschlossenen Magnetventilen 20, 21, 22 an der Ausgangsseite der Drosselanordnung 15 und somit auch an der Rückseite der Spiegelfläche 12 des adaptiven Spiegels 7 ein Druck von 0,5 bar an.

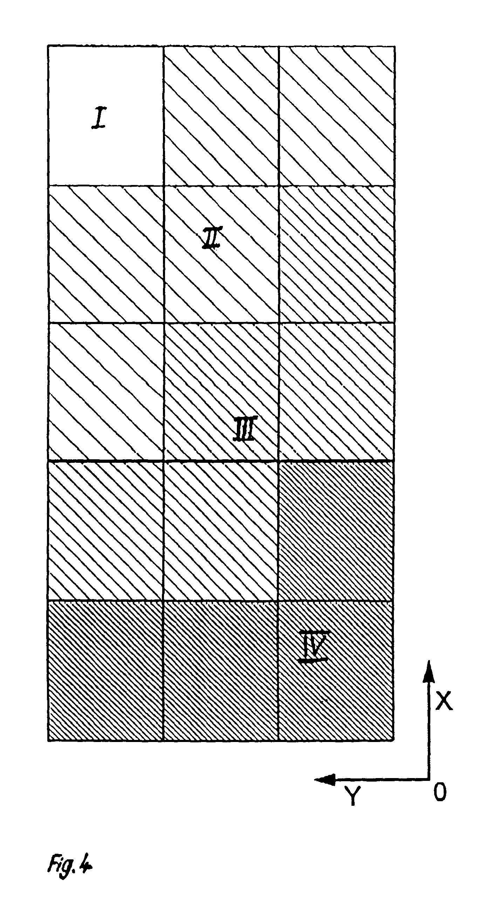

Wie Figur 4 zeigt, ist ein von dem betreffenden Laserschneidkopf überstrichener Bewegungsbereich in der horizontalen x-y-Ebene in insgesamt fünfzehn Felder unterteilt. Dabei bilden die gleichartig schraffierten Felder Teilbereiche I, II, III, IV des Bewegungsbereichs des Laserschneidkopfs, innerhalb derer sich bei der Bewegung des Laserschneidkopfs parallel zu dem Werkstück die Länge des Laserstrahls von dem Lasergenerator bis zum Laserschneidkopf nur geringfügig ändert. Dementsprechend führt eine Positionsänderung des Laserschneidkopfs innerhalb der Teilbereiche I, II, III, IV jeweils nicht zu einer wesentlichen Änderung der Fokuslage des Laserstrahls senkrecht zu dem Werkstück. Eine Anpassung der Fokuslage ist allerdings dann geboten, wenn der Laserschneidkopf von einem Teilbereich in einen diesem benachbarten Teilbereich wechselt. Dann nämlich nimmt die Änderung der Länge des Laserstrahls einen Wert an, der zu einer für das Schneidergebnis maßgeblichen Änderung der Lage des Fokus relativ zu dem Laserschneidkopf führen würde. Beim Übergang des Laserschneidkopfs von einem Teilbereich I, II, III, IV in einen anderen müssen dementsprechend die optischen Einrichtungen zur Fokuslageneinstellung derart gesteuert werden, daß sich bezogen auf das zu bearbeitende Werkstück eine gleichbleibende Fokuslage ergibt.

Bei einer Vorrichtung gemäß den Figuren 2 und 3 wird zu diesem Zweck der Druck des Fluids in der Fluidleitung 14 reguliert. Der sich bei geschlossenen Magnetventilen 20, 21, 22 und geöffnetem Drosselventil 16 an der Ausgangsseite der Drosselanordnung 15 einstellende Druck erzeugt eine Krümmung der Spiegelfläche 12 des adaptiven Spiegels 7, wie sie dem Teilbereich I in Figur 4 zugeordnet ist. Ändert nun der Laserschneidkopf die Position in seiner horizontalen Bewegungsebene und geht er von dem Teilbereich I über in den Teilbereich II, so wird über die numerische Steuerung der Laserschneidmaschine das Magnetventil 20 In Öffnungssteilung geschaltet. Dadurch erhöht sich der Druck an der Ausgangsseite der Drosselanordnung 15 und somit auch an der Rückseite der Spiegelfläche 12 des adaptiven Spiegels 7. Dementsprechend verändert sich die Krümmung der Spiegelfläche 12, und die Änderung der Geometrie des Laserstrahls, die sich aufgrund der Änderung der Strahllänge ergeben würde, kann ausgeglichen werden.

Infolgedessen bleiben die Brechungsverhältnisse an der Sammellinse 8 ungeachtet der Positionswechsel des Laserschneidkopfs unverändert und der von der Sammellinse 8 erzeugte Fokus des Laserstrahls 1 behält seine Lage bezüglich des zu bearbeitenden Werkstücks unverändert bei. In analoger Weise wird über die numerische Steuerung das Magnetventil 21 in Öffnungsstellung geschaltet, sobald der Laserschneidkopf in den Teilbereich III gemäß Figur 4 wechselt. Bei Übergang des Laserschneidkopfs in den Teilbereich IV wird schließlich das Magnetventil 22 zugeschaltet.

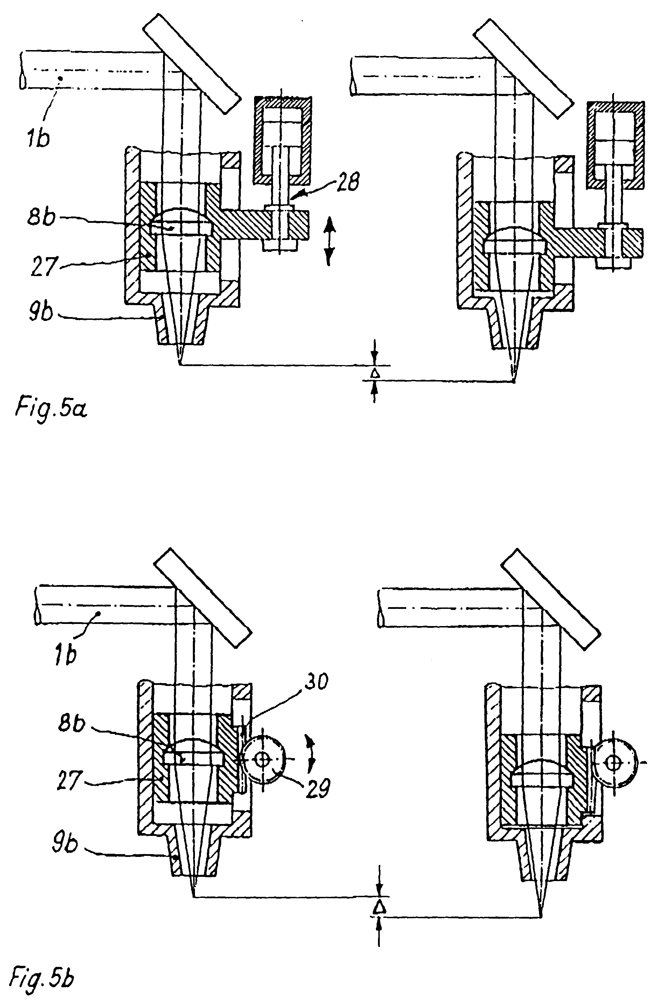

Die in den Figuren 5a und 5b dargestellte Vorrichtung bedient sich zur Fokuslagenanpassung anstelle eines adaptiven Spiegels einer senkrecht zu dem Werkstück verschiebbaren Sammellinse 8b. Die Sammellinse 8b ist an einem Träger 27 fest gelagert und kann gemeinsam mit diesem in Achsrichtung eines Laserstrahls 1b senkrecht zu der Werkstückoberfläche verschoben werden. Der Träger 27 ist an dem Laserschneidkopf in der angegebenen Bewegungsrichtung verschiebbar geführt. Mit dem Gehäuse des Laserschneidkopfs fest verbunden ist eine Düse 9b. Zum Heben und Senken des Trägers 27 mit der Sammellinse 8b dient bei der Vorrichtung nach Figur 5a eine Kolben-Zylinder-Anordnung 28; bei der Vorrichtung nach Figur 5b wird ein elektrischer Stellmotor verwendet, der mit einem Antriebsritzel 29 in eine Zahnstange 30 an dem Träger 27 eingreift.

Ändert sich nun infolge eines Positionswechsels des Laserschneidkopfs in dessen horizontaler Bewegungsebene die Länge des Laserstrahls 1b von dem Lasergenerator bis zu der Sammellinse 8b, und verändert sich dementsprechend auch die Geometrie des auf die Sammellinse 8b auftreffenden Laserstrahls 1b, so kann die daraus an sich resultierende und in Figur 5b angedeutete Änderung der Fokuslage durch eine Verschiebung der Sammellinse 8b senkrecht zu dem Werkstück ausgeglichen werden. Zu diesem Zweck steuert die numerische Steuerung der Laserschneidmaschine die Kolben-Zylinder-Anordnung 28 bzw. den elektrischen Stellmotor an. Mittels der Kolben-Zylinder-Anordnung 28 bzw. mittels des elektrischen Stellmotors wird der Träger 27 mit der Sammellinse 8b gegenüber dem Werkstück angehoben oder abgesenkt. Dadurch kann die Lage des von der Sammellinse 8b erzeugten Fokus bezogen auf das Werkstück beibehalten werden.

Die an dem Laserschneidkopf fest angebrachte Düse 9b ändert während der Ausgleichsbewegung der Sammellinse 8b ihre Höhenlage gegenüber dem Werkstück nicht. Eine über den gesamten horizontalen Bewegungsbereich des Laserschneidkopfs einheitliche Schneidspurbedüsung kann auf diese Art und Weise gewährleistet werden.

Die Ansteuerung der Kolben-Zylinder-Anordnung 28 bzw. des elektrischen Stellmotors durch die numerische Steuerung der Laserschneidmaschine kann wie bei der Vorrichtung der Figuren 2 und 3 anhand einer in Figur 4 dargestellten Teilbereichseinteilung des Bewegungsbereichs des Laserschneidkopfs erfolgen. Jedem der in Figur 4 dargestellten Teilbereiche I, II, III, IV ist in diesem Fall eine bestimmte Schaltstellung der Kolben-Zylinder-Anordnung 28 bzw. des elektrischen Stellmotors und somit ein bestimmter vertikaler Abstand der Sammellinse 8b von dem Werkstück zugeordnet.

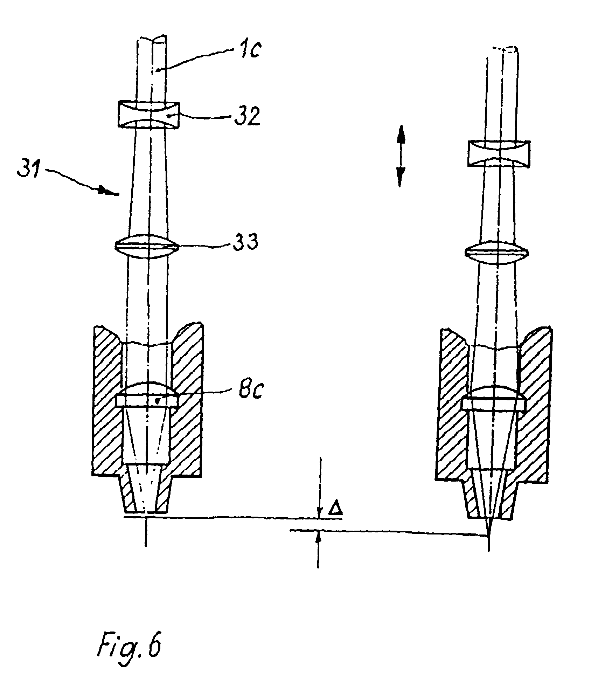

Wie Figur 6 zeigt, kann die Fokuslage senkrecht zu dem zu bearbeitenden Werkstück auch mittels eines Linsensystems 31 eingestellt werden. Das Linsensystem 31 umfaßt eine Zerstreuungslinse 32 sowie eine Sammellinse 33 und ist der als Fokussieroptik dienenden Sammellinse 8c vorgeschaltet. Die Zerstreuungslinse 32 und die Sammellinse 33 sind in Achsrichtung eines Laserstrahls 1c relativ zueinander verschiebbar. Eine Relativverschiebung der Zerstreuungslinse 32 und der Sammellinse 33 ändert die Brennweite des Linsensystems 31 und somit die Geometrie des auf die Sammellinse 8c auftreffenden Laserstrahls 1c. Durch eine mittels der numerischen Steuerung der Laserschneidmaschine in der vorstehend beschriebenen Art und Weise gesteuerte Verschiebung der Zerstreuungslinse 32 gegenüber der Sammellinse 33 können die Brechungsverhältnisse an der Sammellinse 8c und somit die Fokuslage bezogen auf das Werkstück unabhängig von der Position des Laserschneidkopfs in dessen horizontaler Bewegungsebene vereinheitlicht werden. Die Verstellung der Zerstreuungslinse 32 erfolgt motorisch. Der Bewegungsbereich des Laserschneidkopfs ist gemäß Figur 4 in Teilbereiche unterteilt, denen jeweils ein bestimmter Sollwert für den Abstand zwischen der Zerstreuungslinse 32 und der Sammellinse 33 zugeordnet ist.

## Patentansprüche

1. Laserschneidmaschinenanordnung umfassend
- eine Laserschneidmaschine mit
-- einem Lasergenerator (2),
-- einem Laserschneidkopf (10) mit einer Fokussieroptik (8, 8b, 8c) für den Laserstrahl (1, 1b, 1c) und einer Stelleinrichtung zur Einstellung der Fokuslage des Laserstrahls (1, 1b, 1c) durch Verlagerung des Fokus' gegenüber dem Laserschneidkopf (10) im wesentlichen senkrecht zu einem zu bearbeitenden Werkstück und
-- einem Antrieb für den Laserschneidkopf (10)
sowie
- eine numerische Steuerung,
wobei
- der Antrieb für den Laserschneidkopf (10) durch die numerische Steuerung gesteuert ist,
- der Laserschneidkopf (10) mittels des Antriebs relativ zu dem Lasergenerator (2) und/oder relativ zu dem zu bearbeitenden Werkstück in einer Ebene im wesentlichen parallel zu dem Werkstück verschiebbar ist und während des Bearbeitungsvorgangs eine Fläche bestreicht, die in wenigstens zwei Teilbereiche (I, II, III, IV) unterteilt ist und
- zur Einhaltung einer senkrecht zu dem Werkstück gleichbleibenden Fokuslage in Abhängigkeit von der Position des Laserschneidkopfs (10) in dessen Bewegungsebene parallel zu dem Werkstück mittels der numerischen Steuerung die momentane Position des Laserschneidkopfs (10) erfaßbar, der erfaßten Position des Laserschneidkopfs (10) ein Verstellwert zuordenbar und die Stelleinrichtung zur Einstellung der Fokuslage des Laserstrahls (1, 1b, 1c) anhand des Verstellwertes steuerbar ist,
dadurch gekennzeichnet, daß mittels der numerischen Steuerung jedem der Teilbereiche (I, II, III, IV) der von dem Laserschneidkopf (10) bestrichenen Fläche ein Verstellwert zur Einstellung einer gleichbleibenden Fokuslage unmittelbar zuordenbar ist.

2. Laserschneidmaschinenanordnung nach Anspruch 1, dadurch gekennzeichnet, daß die Stelleinrichtung zur Einstellung der Fokuslage wenigstens einen der Fokussieroptik (8) in Richtung des Laserstrahls (1) vorgeschalteten Umlenkspiegel (7) für den Laserstrahl (1) aufweist, welcher an der seiner Spiegelfläche (12) abgewandten Fläche von einem unter veränderbarem Druck stehenden Fluid beaufschlagt und dadurch adaptiv gekrümmt wird und welcher über eine stellbare Drosselanordnung (15) mit Fluid beaufschlagt wird, mittels derer der Druck des Fluids veränderbar ist, wobei die numerische Steuerung der erfaßten Position des Laserschneidkopfs (10) als Verstellwert zur Einstellung der Fokuslage einen Sollwert für den Druck des Fluids zuordnet und zur Einstellung dieses Sollwertes die stellbare Drosselanordnung (15) steuert.

3. Laserschneidmaschinenanordnung nach Anspruch 2, dadurch gekennzeichnet, daß den Teilbereichen (I,II,III,IV) mit in etwa übereinstimmender Länge des Laserstrahls von dem Lasergenerator (2) bis zum Laserschneidkopf (10) ein übereinstimmender Sollwert für den Druck des Fluids zugeordnet ist und daß als Drosselanordnung (15) eine Parallelschaltung von Drosselventilen (16,17,18,19) vorgesehen ist, deren Anzahl der Anzahl unterschiedlicher Sollwerte für den Druck des Fluids entspricht.

4. Laserschneidmaschinenanordnung nach Anspruch 3, dadurch gekennzeichnet, daß eines der parallel geschalteten Drosselventile (16) permanent von Fluid durchströmt wird.

5. Laserschneidmaschinenanordnung nach Anspruch 1, dadurch gekennzeichnet, daß die Fokussieroptik (8b) an dem Laserschneidkopf (10) mittels eines Zustellmotors im wesentlichen senkrecht zu dem Werkstück verschiebbar geführt ist.

6. Laserschneidmaschinenanordnung nach Anspruch 5, dadurch gekennzeichnet, daß die Fokussieroptik (8b) mittels eines durch die numerische Steuerung gesteuerten Zustellmotors verschiebbar ist.

7. Laserschneidmaschinenanordnung nach Anspruch 6, dadurch gekennzeichnet, daß als Zustellmotor ein elektrischer Schrittmotor vorgesehen ist.

8. Laserschneidmaschinenanordnung nach Anspruch 5, dadurch gekennzeichnet, daß als Zustellmotor eine Kolben-Zylinder-Anordnung (28) vorgesehen ist.

9. Laserschneidmaschinenanordnung nach Anspruch 1, dadurch gekennzeichnet, daß die Stelleinrichtung zur Einstellung der Fokuslage wenigstens ein der Fokussieroptik (8c) in Richtung des Laserstrahls (1c) vorgeschaltetes Linsensystem (31) mit verstellbarer Brennweite aufweist.

10. Laserschneidmaschinenanordnung nach Anspruch 9, dadurch gekennzeichnet, daß das Linsensystem (31) wenigstens eine Sammellinse (33) und wenigstens eine Zerstreuungslinse (32) aufweist, welche in Richtung des Laserstrahls (1c) hintereinander angeordnet und zur Verstellung der Brennweite relativ zueinander verschiebbar sind.

11. Laserschneidmaschinenanordnung nach Anspruch 9 oder 10, dadurch gekennzeichnet, daß die Brennweite des Linsensystems (31) durch die numerische Steuerung gesteuert wird.

## Claims

1. Laser cutting machine arrangement comprising
- a laser cutting machine having
-- a laser generator (2),
-- a laser cutting head (10) having an optical focusing unit (8, 8b, 8c) for the laser beam (1, 1b, 1c) and a setting device for adjusting the focus location of the laser beam (1, 1b, 1c) by displacement of the focus relative to the laser cutting head (10) substantially perpendicularly to a workpiece to be machined and
-- a drive for the laser cutting head (10)
and
- a numerical control,
wherein
- the drive for the laser cutting head (10) is controlled by the numerical control,
- the laser cutting head (10) is displaceable in a plane substantially parallel with the workpiece by means of the drive relative to the laser generator (2) and/or relative to the workpiece to be machined and, during the machining process, covers an area which is subdivided into at least two partial regions (I, II, III, IV) and
- in order to keep to a focus location which remains constant perpendicularly to the workpiece dependent on the position of the laser cutting head (10) in the plane of movement thereof which is parallel with the workpiece by means of the numerical control, the instantaneous position of the laser cutting head (10) can be detected, an adjusting value can be assigned to the detected position of the laser cutting head (10) and the setting device for adjusting the focus location of the laser beam (1, 1b, 1c) can be controlled by means of the adjusting value,
characterised in that, by means of the numerical control, an adjusting value for adjusting a constant focus location can be assigned directly to each of the partial regions (I, II, III, IV) of the area covered by the laser cutting head (10).

2. Laser cutting machine arrangement according to claim 1, characterised in that the setting device for adjusting the focus location has at least one deflecting mirror (7) for the laser beam (1) which is arranged upstream of the optical focusing unit (8) in the direction of the laser beam (1) and which, at the face thereof remote from its mirror face (12), is acted on by a fluid under variable pressure and which is thereby adaptively curved and which is acted on by fluid via an adjustable restrictor arrangement (15), by means of which the pressure of the fluid is variable, the numerical control assigning to the detected position of the laser cutting head (10) a desired value for the pressure of the fluid as an adjusting value for adjusting the focus location and controlling the adjustable restrictor arrangement (15) in order to adjust that desired value.

3. Laser cutting machine arrangement according to claim 2, characterised in that a matching desired value for the pressure of the fluid is assigned to the partial regions (I, II, III, IV) with an approximately matching length of the laser beam from the laser generator (2) to the laser cutting head (10), and in that a parallel connection of restrictor valves (16, 17, 18, 19) is provided as the restrictor arrangement (15) and the number thereof corresponds to the number of different desired values for the pressure of the fluid.

4. Laser cutting machine arrangement according to claim 3, characterised in that fluid flows permanently through one of the parallel-connected restrictor valves (16).

5. Laser cutting machine arrangement according to claim 1, characterised in that the optical focusing unit (8b) on the laser cutting head (10) is guided displaceably substantially perpendicularly to the workpiece by means of a feed motor.

6. Laser cutting machine arrangement according to claim 5, characterised in that the optical focusing unit (8b) is displaceable by means of a feed motor controlled by the numerical control.

7. Laser cutting machine arrangement according to claim 6, characterised in that an electrical stepper motor is provided as the feed motor.

8. Laser cutting machine arrangement according to claim 5, characterised in that a piston-cylinder arrangement (28) is provided as the feed motor.

9. Laser cutting machine arrangement according to claim 1, characterised in that the setting device for adjusting the focus location has at least one lens system (31) which is arranged upstream of the optical focusing unit (8c) in the direction of the laser beam (1c) and which has an adjustable focal distance.

10. Laser cutting machine arrangement according to claim 9, characterised in that the lens system (31) has at least one convergent lens (33) and at least one divergent lens (32) which are arranged one behind the other in the direction of the laser beam (1c) and which are displaceable relative to each other for adjusting the focal distance.

11. Laser cutting machine arrangement according to claim 9 or claim 10, characterised in that the focal distance of the lens system (31) is controlled by the numerical control.

## Revendications

1. Ensemble de découpeuse au laser comprenant
- une découpeuse au laser avec
-- un générateur laser (2),
-- une tête de découpage au laser (10) avec une optique de focalisation (8, 8b, 8c) et un dispositif de réglage pour régler la position focale du faisceau laser (1, 1b, 1c) en déplaçant le foyer par rapport à la tête de découpage au laser (10) essentiellement perpendiculairement à une pièce à usiner, et
-- un entraînement pour la tête de découpage au laser (10),
ainsi que
- une commande numérique,
dans lequel
- l'entraînement pour la tête de découpage au laser (10) est commandé par la commande numérique,
- la tête de découpage au laser (10) peut, au moyen de l'entraînement, être déplacée, par rapport au générateur laser (2) et/ou par rapport à la pièce à usiner, dans un plan essentiellement parallèlement à la pièce, et balaye pendant le processus d'usinage une surface qui est divisée en au moins deux régions partielles (I, II, III, IV), et
- afin de maintenir une position focale restant la même perpendiculairement à la pièce, en fonction de la position de la tête de découpage au laser (10) dans son plan de déplacement parallèlement à la pièce, on peut, au moyen de la commande numérique, constater la position momentanée de la tête de découpage au laser (10), associer à la position constatée de la tête de découpage au laser (10) une valeur de réglage, et commander à l'aide de la valeur de réglage le dispositif de réglage pour régler la position focale du faisceau laser (1, 1b, 1c),
**caractérisé** en ce que, au moyen de la commande numérique, on peut associer directement à chacune des régions partielles (I, II, III, IV) de la surface balayée par la tête de découpage au laser (10) une valeur de réglage pour régler une position focale restant la même.

2. Ensemble de découpeuse au laser selon la revendication 1, **caractérisé** en ce que le dispositif de réglage pour régler la position focale présente au moins un miroir de renvoi (7) pour le faisceau laser (1), miroir qui précède l'optique de focalisation (8) dans la direction du faisceau laser (1) et qui est sollicité sur la face opposée à sa face réfléchissante (12) par un fluide se trouvant sous une pression variable et est ainsi incurvé de façon adaptative, et qui est sollicité en fluide au moyen d'un dispositif d'étranglement réglable (15) qui permet de faire varier la pression du fluide, la commande numérique associant à la position constatée de la tête de découpage au laser (10), comme valeur de réglage pour régler la position focale, une valeur de consigne pour la pression du fluide, et commandant le dispositif d'étranglement réglable (15) afin de régler cette valeur de consigne.

3. Ensemble de découpeuse au laser selon la revendication 2, **caractérisé** en ce qu'on associe aux régions partielles (I, II, III, IV), dans lesquelles la longueur du faisceau laser depuis le générateur laser (2) jusqu'à la tête de découpage au laser (10) est approximativement identique, une valeur de consigne identique pour la pression du fluide, et en ce qu il est prévu comme dispositif d'étranglement (15) un montage en parallèle de soupapes d'étranglement (16, 17, 18 19) dont le nombre correspond au nombre de valeurs de consigne différentes pour la pression du fluide.

4. Ensemble de découpeuse au laser selon la revendication 3, **caractérisé** en ce qu'une des soupapes d'étranglement (16) montées en parallèle est traversée en permanence par du fluide.

5. Ensemble de découpeuse au laser selon la revendication 1, **caractérisé** en ce que l'optique de focalisation (8b) prévue sur la tête de découpage au laser (10) est guidée à déplacement essentiellement perpendiculairement à la pièce au moyen d'un moteur d'avance.

6. Ensemble de découpeuse au laser selon la revendication 5, **caractérisé** en ce que l'optique de focalisation (8b) peut être déplacée au moyen d'un moteur d'avance commandé par la commande numérique.

7. Ensemble de découpeuse au laser selon la revendication 6, **caractérisé** en ce qu'un moteur électrique pas à pas est prévu comme moteur d'avance.

8. Ensemble de découpeuse au laser selon la revendication 5, **caractérisé** en ce qu'un ensemble cylindre-piston (28) est prévu comme moteur d'avance.

9. Ensemble de découpeuse au laser selon la revendication 1, **caractérisé** en ce que le dispositif de réglage pour régler la position focale présente au moins un système de lentilles (31) à distance focale réglable, qui précède l'optique de focalisation (8c) dans la direction du faisceau laser (1c).

10. Ensemble de découpeuse au laser selon la revendication 9, **caractérisé** en ce que le système de lentilles (31) présente au moins une lentille convergente (33) et au moins une lentille divergente (32), qui sont disposées l'une à la suite de l'autre dans la direction du faisceau laser (1) et qui peuvent être déplacées l'une par rapport à l'autre afin de régler la distance focale.

11. Ensemble de découpeuse au laser selon la revendication 9 ou 10, **caractérisé** en ce que la distance focale du système de lentilles (31) est commandée par la commande numérique.
